# EUROPEAN PATENT APPLICATION

(11) **EP 1 662 079 A1**
(43) Date of publication of application: **31.05.2006**
(21) Application number: 04772671.6
(22) Date of filing: 26.08.2004
(51) Int. Cl.: E05B 49/00, B60R 25/00, B60R 25/04

(54) **VEHICLE UNLOCKING SYSTEM**

(30) Priority: 01.09.2003 JP 2003309071
(71) Applicant: MATSUSHITA ELECTRIC INDUSTRIAL CO., LTD., Kadoma-shi, Osaka 571-8501 (JP)
(72) Inventor: YUHARA, Masahiro Matsushita Electric Industrial Co, Chuo-ku,Osaka-shi,Osaka 540-6319 (JP)
(74) Representative: Pautex Schneider, Nicole Véronique
(86) International application number: PCT/JP2004/012717
(87) International publication number: WO 2005/021905

(57) **Abstract**

A vehicle control apparatus (30), comprising: antenna means (31a) for communicating with an authentication information storage device (20) having stored therein authentication information used to authenticate a user of a vehicle; retaining means (33) provided in the vehicle in spaced apart relationship with the antenna means (31a) at a predetermined distance to retain the authentication information storage device (20); and control means (32) for selectively outputting a first control signal to control the operation of a predetermined first device and a second control signal to control the operation of a predetermined second device based on the authentication information received by the antenna means (31a), and in which the control means (32) is operative to output the first control signal to the first device under the condition that the vehicle lock is locked, and the authentication information is matched with predetermined authentication information, and output the second control signal to the second device under the condition that the authentication information is matched with predetermined authentication information after the first control signal is outputted to the first device, the vehicle lock is unlocked, and the authentication information storage device (20) is retained by the retaining means (33).

## Description

### TECHNICAL FIELD OF THE INVENTION

The present invention relates to a vehicle unlocking system for unlocking a lock of a vehicle by means of, for example, wireless communication.

### DESCRIPTION OF THE RELATED ART

Up until now, there have been proposed a wide variety of vehicle unlocking systems for unlocking a lock of a vehicle. One typical example of the conventional vehicle unlocking system is disclosed in Japanese Patent Laid-Open Publication H09-310548 as comprising a transmitting device for transmitting a verification code used to verify a vehicle, a receiving antenna constituted by a column support mounted on the front upper side of a driver seat in the vehicle to support a sun visor, a receiving device for outputting a signal indicative that the door lock mechanism is enabled or not based on the verification code received by the receiving antenna, and control means for controlling a motor to have the motor assume one of operation modes including a lock operation mode having the door lock mechanism lock a door of the vehicle and an unlocking operation mode having the door lock mechanism unlock the door of the vehicle. The conventional vehicle unlocking system thus constructed is operative to selectively lock and unlock a door of the vehicle based on a result of judgment whether or not the verification code received by the receiving antenna is matched with a verification code already stored therein.

In the conventional vehicle unlocking system thus constructed as previously mentioned, however, the receiving device and the control means are operative to lock and unlock the door of the vehicle only based on the result of judgment whether or not the verification code transmitted by the transmitting device is matched with the verification code already stored therein.

This means that the conventional vehicle unlocking system thus constructed as previously mentioned encounters a drawback in that the conventional vehicle unlocking system is required to further comprise a transmitting device, a receiving device, control means, and the like, in order to realize each of functions such as, for example, an engine start function operable to permit an engine to start, a in-vehicle telephone usage permission function operable to permit an in-vehicle telephone to be used, and the like, in addition to the vehicle unlocking function operable to unlock the lock of the vehicle, thereby becoming complicated in construction and increased in cost.

Further, the conventional vehicle unlocking system thus constructed as previously mentioned encounters another drawback in that the conventional vehicle unlocking system cannot allow only a person who is in advance authenticated to use the vehicle, resulting from the fact that the transmitting device has stored therein only the verification code used to verify a vehicle.

The present invention was made to solve the foregoing drawbacks, and it is therefore an object of the present invention to provide a vehicle unlocking system which can authenticate a user of the vehicle while being simple in construction and reduced in cost even in the case that additional functions are implemented.

### DISCLOSURE OF THE INVENTION

In accordance with a first aspect of the present invention, there is provided a vehicle control apparatus, comprising: antenna means for communicating with an authentication information storage unit having stored therein authentication information used to authenticate a user of a vehicle; retaining means provided in the vehicle and disposed in spaced apart relationship with the antenna means at a predetermined distance to retain the authentication information storage unit; and control means for selectively outputting a first control signal to control a predetermined first device and a second control signal to control a predetermined second device based on the authentication information received by the antenna means, and in which the control means is operative to output the first control signal to the first device under the condition that a lock of the vehicle is locked and the authentication information is matched with predetermined authentication information, and output the second control signal to the second device under the condition that the authentication information is matched with predetermined authentication information after the lock of the vehicle is unlocked and the authentication information storage unit is retained by the retaining means.

The vehicle control apparatus according to the present invention thus constructed can share the same communication means and control means which are required to control the vehicle unlocking device and the engine start permitting device, resulting from the fact that the control means is operative to output an unlock permission signal to the vehicle unlocking device when the authentication information is matched with the predetermined authentication under the condition that the vehicle lock is locked, and the same control means is operative to output an engine start permission signal to the engine start permitting device under the condition that the authentication information is matched with predetermined authentication information after the lock of the vehicle is unlocked, and the authentication information storage unit is retained by the retaining means. This leads to the fact that the vehicle control apparatus can authenticate a user of the vehicle while being simple in construction and reduced in cost.

Further, in the vehicle control apparatus according to the present invention, the antenna means may be operative to supply electric power to the authentication information storage unit to drive the authentication information storage unit.

The vehicle control apparatus according to the present invention thus constructed can be reduced in a driving cost and lowered in size, resulting from the fact the authentication information storage device can be driven without a battery.

Further, in the vehicle control apparatus according to the present invention, the antenna means may be constituted by a film type antenna.

The vehicle control apparatus according to the present invention thus constructed can be provided even within an exterior mirror unit with ease.

Further, in the vehicle control apparatus according to the present invention, the antenna means may be provided in an outwardly exposed exterior mirror unit forming part of the vehicle.

The vehicle control apparatus according to the present invention thus constructed makes it possible for cable lines originally made for controlling the exterior mirror unit to be shared with signal cables for the communication means while designing and installing the cables, thereby eliminating additional design and works, and thus being reduced in costs. In addition, the vehicle control apparatus according to the present invention thus constructed enables a user of the vehicle to be authenticated with ease using the authentication information storage unit when he or she gets in the vehicle.

Further, in the vehicle control apparatus according to the present invention, the antenna means may be provided in an outwardly exposed sun visor forming part of the vehicle.

The vehicle control apparatus according to the present invention thus constructed enables a user of the vehicle to be authenticated with ease using the authentication information storage unit when he or she gets in the vehicle.

Further, in the vehicle control apparatus according to the present invention, the authentication information storage unit may be constituted by an electronic driver license.

The vehicle control apparatus according to the present invention thus constructed eliminates a need for a user of the vehicle to carry an authentication information storage unit in addition to a driver license obligated by law to carry while driving the vehicle, as well as enables the user of the driver to unlock a vehicle lock with the electronic driver license alone.

In accordance with a second aspect of the present invention, there is provided a vehicle unlocking system, comprising: the aforementioned vehicle control apparatus; and a vehicle unlocking device operative to unlock a lock of the vehicle upon receiving the first control signal.

The vehicle unlocking system according to the present invention thus constructed can unlock the lock of the vehicle when the authentication information is matched with the predetermined authentication under the condition that the authentication information storage unit is not retained by the retaining means.

Further, the vehicle unlocking system according to the present invention may further comprise an engine start permitting device operative to permit an engine forming part of the vehicle to start upon receiving the second control signal.

The vehicle unlocking system according to the present invention thus constructed can share the same communication means and control means which are required to control the vehicle unlocking device and the engine start permitting device, resulting from the fact that the control means is operative to output an unlock permission signal to the vehicle unlocking device when the authentication information is matched with the predetermined authentication under the condition that the vehicle lock is locked, and the same control means is operative to output an engine start permission signal to the engine start permitting device under the condition that the authentication information is matched with predetermined authentication information after the lock of the vehicle is unlocked and the authentication information storage unit is retained by the retaining means. This leads to the fact that the vehicle control apparatus can authenticate a user of the vehicle while being simple in construction and reduced in cost.

Further, the vehicle unlocking system according to the present invention may further comprise an in-vehicle telephone permitting device operative to permit an in-vehicle telephone device to be used upon receiving the second control signal.

The vehicle unlocking system according to the present invention thus constructed can share the same communication means and control means which are required to control the vehicle unlocking device and the in-vehicle telephone permitting device, resulting from the fact that the control means is operative to output an unlock permission signal to the vehicle unlocking device when the authentication information is matched with the predetermined authentication under the condition that the vehicle lock is locked, and the same control means is operative to output a signal to the in-vehicle telephone permitting device to permit an in-vehicle telephone device to be used under the condition that the authentication information is matched with predetermined authentication information after the lock of the vehicle is unlocked and the authentication information storage unit is retained by the retaining means. This leads to the fact that the vehicle control apparatus can authenticate a user of the vehicle while being simple in construction and reduced in cost.

Further, the vehicle unlocking system according to the present invention may further comprise an in-vehicle audio permitting device operative to permit an in-vehicle audio device to be used upon receiving the second control signal.

The vehicle unlocking system according to the present invention thus constructed can share the same communication means and control means which are required to control the vehicle unlocking device and the in-vehicle audio permitting device, resulting from the fact that the control means is operative to output an unlock permission signal to the vehicle unlocking device when the authentication information is matched with the predetermined authentication under the condition that the vehicle lock is locked, and the same control means is operative to output a signal to the in-vehicle audio permitting device to permit an in-vehicle audio device to be used under the condition that the authentication information is matched with predetermined authentication information after the lock of the vehicle is unlocked and the authentication information storage unit is retained by the retaining means. This leads to the fact that the vehicle control apparatus can authenticate a user of the vehicle while being simple in construction and reduced in cost.

Further, the vehicle unlocking system according to the present invention may further comprise a combination meter permitting device operative to permit a combination meter device to be used upon receiving the second control signal.

The vehicle unlocking system according to the present invention thus constructed can share the same communication means and control means which are required to control the vehicle unlocking device and the combination meter permitting device, resulting from the fact that the control means is operative to output an unlock permission signal to the vehicle unlocking device when the authentication information is matched with the predetermined authentication under the condition that the vehicle lock is locked, and the same control means is operative to output a signal to the combination meter permitting device to permit a combination meter device to be used under the condition that the authentication information is matched with predetermined authentication information after the lock of the vehicle is unlocked and the authentication information storage unit is retained by the retaining means. This leads to the fact that the vehicle control apparatus can authenticate a user of the vehicle while being simple in construction and reduced in cost.

Further, the vehicle unlocking system according to the present invention may further comprise an emergency calling permitting device operative to permit an emergency calling device to be used upon receiving the second control signal.

The vehicle unlocking system according to the present invention thus constructed can share the same communication means and control means which are required to control the vehicle unlocking device and the emergency calling permitting device, resulting from the fact that the control means is operative to output an unlock permission signal to the vehicle unlocking device when the authentication information is matched with the predetermined authentication under the condition that the vehicle lock is locked, and the same control means is operative to output a signal to the emergency calling permitting device to permit a emergency calling device to be used under the condition that the authentication information is matched with predetermined authentication information after the lock of the vehicle is unlocked and the authentication information storage unit is retained by the retaining means. This leads to the fact that the vehicle control apparatus can authenticate a user of the vehicle while being simple in construction and reduced in cost.

Further, the vehicle unlocking system according to the present invention may further comprise a road-to-vehicle communication permitting device operative to permit a road-to-vehicle communication device to be used upon receiving the second control signal.

The vehicle unlocking system according to the present invention thus constructed can share the same communication means and control means which are required to control the vehicle unlocking device and the road-to-vehicle communication permitting device, resulting from the fact that the control means is operative to output an unlock permission signal to the vehicle unlocking device when the authentication information is matched with the predetermined authentication under the condition that the vehicle lock is locked, and the same control means is operative to output a signal to the road-to-vehicle communication permitting device to permit a road-to-vehicle communication device to be used under the condition that the authentication information is matched with predetermined authentication information after the lock of the vehicle is unlocked and the authentication information storage unit is retained by the retaining means. This leads to the fact that the vehicle control apparatus can authenticate a user of the vehicle while being simple in construction and reduced in cost.

### BRIEF DESCRIPTION OF THE DRAWINGS

The features and advantages of a vehicle unlocking system according to the present invention will be more clearly understood from the following description taken in conjunction with the accompanying drawings in which:
FIG. 1 is a block diagram showing a preferred embodiment of the vehicle unlocking system according to the present invention;
FIG. 2 A is a view showing an example of an IC card holder mounted on the side of the driver seat;
FIG. 2B is an exploded explanatory view showing an exterior mirror with a planar antenna;
FIG. 3 is a sequence chart showing an operation of the preferred embodiment of the vehicle unlocking system;
FIG. 4A is a view showing an example of an IC card holder mounted on the upper side of a driver seat in the vicinity of the inner side of a sun visor; and
FIG. 4B is a view showing an example of a sun visor with a planar antenna.

### DESCRIPTION OF THE PREFERRED EMBODIMENTS

Preferred embodiments of the present invention will be described hereinafter with reference to the drawings.

The description hereinlater will be directed to the construction of the present embodiment of the vehicle unlocking system.

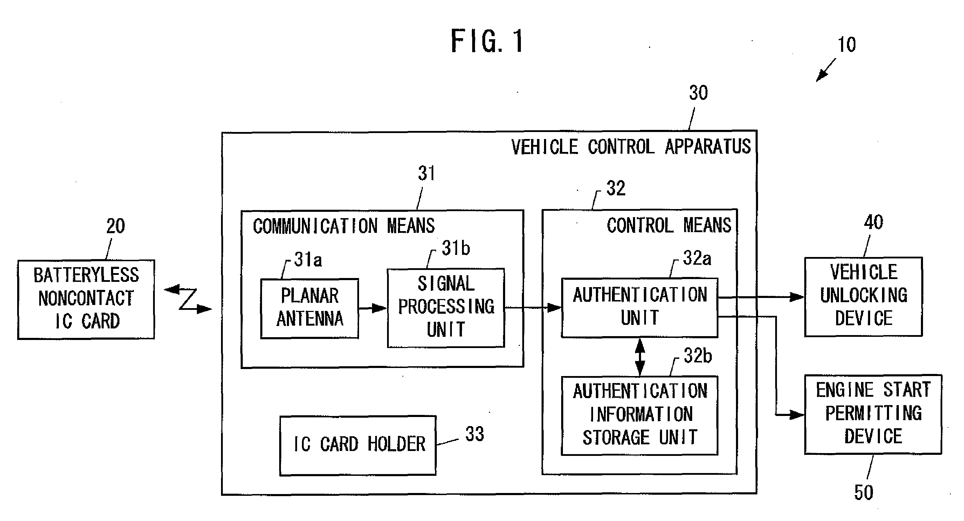

Referring to FIG. 1 of the drawings, there is shown a present embodiment of the vehicle unlocking system 10 comprising a batteryless noncontact IC (Integrated Circuit) card 20 having stored therein authentication information used to authenticate a user of a vehicle, a vehicle unlocking device 40 for unlocking a vehicle lock, an engine start permitting device 50 for permitting an engine forming part of said vehicle to start, and a vehicle control apparatus 30 for controlling the vehicle unlocking device 40 and the engine start permitting device 50 on the basis of the authentication information. As will be seen from the drawings, there have been described only one batteryless noncontact IC card 20 provided in the vehicle unlocking system 10 for the purpose of simplifying the description and assisting in understanding about the present embodiment. It is, however, needless to mention that the vehicle unlocking system 10 may comprise a plurality of batteryless noncontact IC cards 20. Further, the batteryless noncontact IC card 20 may be constituted by an electronic driver license.

The vehicle control apparatus 30 comprises communication means 31 for communicating with the batteryless noncontact IC card 20, control means 32 for authenticating a user of the vehicle, and an IC card holder 33 for retaining the batteryless noncontact IC card 20.

The batteryless noncontact IC card 20 includes a storage unit for having stored therein authentication information used to authenticate a user of a vehicle, and an antenna, not shown, for communicating with the vehicle control apparatus 30. Here, the authentication information is intended to mean information on a user who is permitted by an owner of the vehicle to use the vehicle, and may include for example, ID (Identification) number, an electronic driver license number, and the like.

The communication means 31 includes a planar antenna 31a operable to communicate with the batteryless noncontact IC card 20, and a signal processing unit 31b operable to process signals transmitted and received through the planar antenna 31a.

The planar antenna 31a is constituted by a film type antenna made of, for example, a copper plated pattern in the form of a spiral shape, and capable of being mounted on a rounded surface, a spherical surface, a multilevel surface, and the like. In addition, the planar antenna 31a is preferably waterproof finished if mounted exterior to the vehicle.

The signal processing unit 31b is constituted by, an oscillation circuit, a modulation circuit, a demodulation circuit, and the like. The signal processing unit 31b is designed to supply electric power to operate the batteryless noncontact IC card 20 by means of a carrier wave having a frequency of, for example, 13.56 MHz. The signal processing unit 31b is operative to modulate the phase of the carrier wave of, for example, 13.56 MHz, in order to communicate with the batteryless noncontact IC card 20 so as to receive authentication information data from the batteryless noncontact IC card 20 and transmit data to the batteryless noncontact IC card 20.

The control means 32 includes an authentication unit 32a for authenticating a user of the vehicle, and an authentication information storage unit 32b having stored therein predetermined authentication information. The control means 32 is constituted by a microprocessor, a memory, and the like. The control means 32 is operative to selectively output an unlock permission signal (first control signal) to the vehicle unlocking device 40 and an engine start permission signal (second control signal) to the engine start permitting device 50 based on the authentication information received by the communication means 31.

The IC card holder 33 is made of, for example, a plastic material, and designed to retain the batteryless noncontact IC card 20. The IC card holder 33 is mounted in an area of the vehicle where the batteryless noncontact IC card 20 can receive electric power through the planar antenna 31a. This means that IC card holder 33 may be disposed spaced apart from the planar antenna 31a at a distance of, for example, 30 cm or less.

The installation examples of the planar antenna 31a and the IC card holder 33 will be described hereinlater.

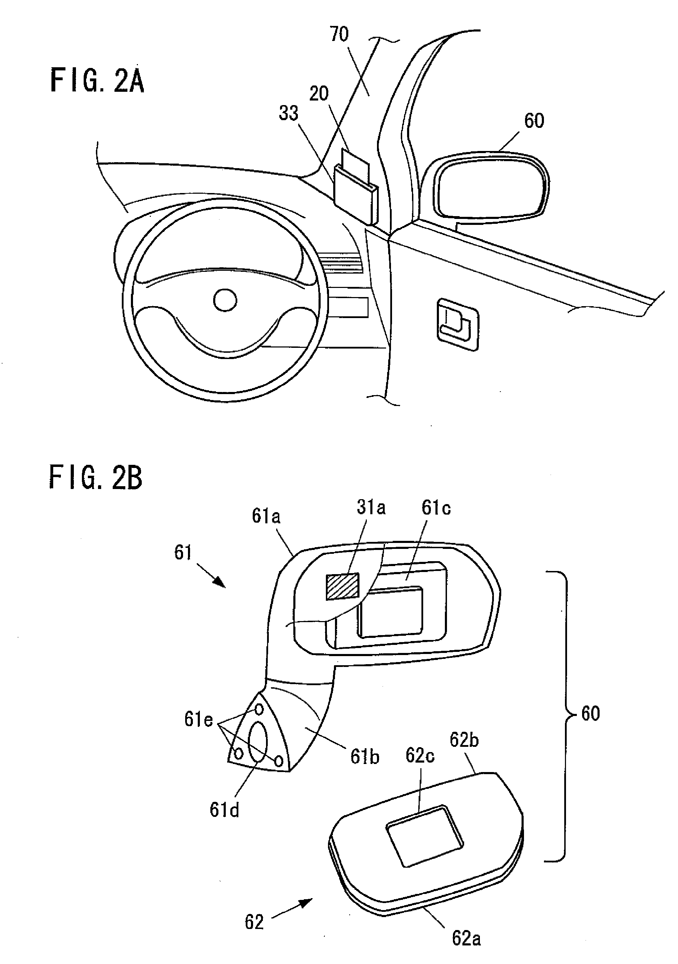

FIG. 2A is a view showing an example of an IC card holder 33 mounted in the vicinity of an attaching portion of an outwardly exposed exterior mirror unit 60 and a batteryless noncontact IC card 20 inserted in the IC card holder 33. The IC card holder 33 is fixedly connected with an inner wall of a window frame 70 forming part of a driver seat door with screws, adhesive tapes, and the like. In the present embodiment, the user of the vehicle can insert the batteryless noncontact IC card 20 into the IC card holder 33 irrespective of the direction of the batteryless noncontact IC card 20, viz., without regard to, for example, front or rear face, and upper or lower portion of the batteryless noncontact IC card 20.

FIG. 2B is a view showing a mirror unit support portion 61 and a mirror assembly portion 62 collectively forming part of the exterior mirror unit 60. In FIG. 2B, the mirror unit support portion 61 and the mirror assembly portion 62 are shown as being dismounted from each other. The mirror unit support portion 61 is made of, for example, a plastic material, and includes a mirror support member 61 a and an arm member 61b. The mirror support member 61a includes an actuator 61c for adjusting a mounting angle of the mirror assembly portion 62, and communication means 31.

The planar antenna 31 a is mounted on a rear face of the actuator 61c, and fixedly connected with an inner wall of the mirror support member 61a with, for example, an adhesive tape, and the like. The arm member 61b has formed therein a cable hole 61d through which cables of the planar antenna 31a and the actuator 61c are passing, and a plurality of screw holes 61e through which screws are screwed to secure the exterior mirror unit 60 to the driver seat door.

The mirror assembly portion 62 includes a mirror member 62a, a mirror holder 62b made of a plastic material to hold the mirror member 62a, and an actuator fixing member 62c to be fixed with the actuator 61 c.

The construction as shown in FIGS. 2A and 2B makes it possible for the planar antenna 31a to supply electric power to the batteryless noncontact IC card 20 to drive the batteryless noncontact IC card 20, thereby enabling data communication.

While it has been described in the above that the planar antenna 31 a is shown in FIG 2B as being fixedly connected with an inner wall of the mirror support member 61a, the planar antenna 31a may be fixedly connected with an inner wall of the arm member 61b, the mirror holder 62b, or the like. Further, the signal processing unit 31b forming part of the communication means 31 may be mounted within the exterior mirror unit 60. This construction can reduce a distance between the planar antenna 31a and the signal processing unit 31b, thereby damping influences caused by noise in comparison with the construction, in which the distance between the planar antenna 31a and the signal processing unit 31b is made longer.

The vehicle unlocking device 40 is operative to carry out an unlock operation of unlocking the vehicle locks including, for example, a door lock and a trunk lock, upon receiving the unlock permission signal from the control means 32. The vehicle locks to be unlocked by the unlocking operation may further include other locks such as, for example, locks of a globe box provided in front of a passenger seat and a seat box provided between the driver seat and the passenger seat.

The engine start permitting device 50 is operative to carry out an engine start permission operation of permitting an engine to start by using an engine start key upon receiving the engine start permission signal from the control means 32.

The batteryless noncontact IC card 20 constitutes authentication information storage device. The planar antenna 31a constitutes antenna means. The IC card holder 33 constitutes retaining means. The unlock permission signal constitutes a first control signal. The engine start permission signal constitutes a second control signal.

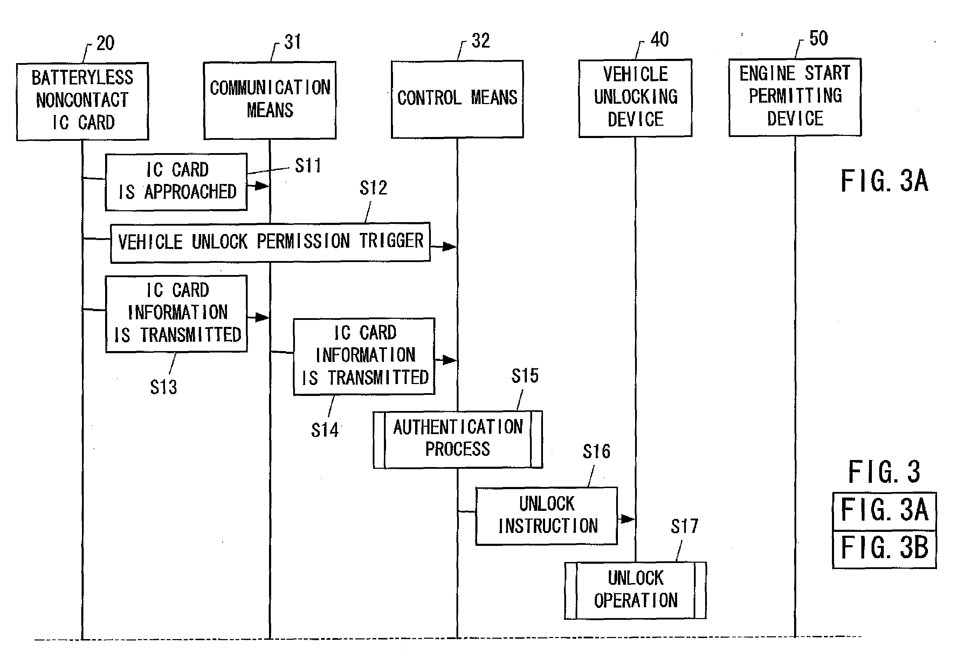

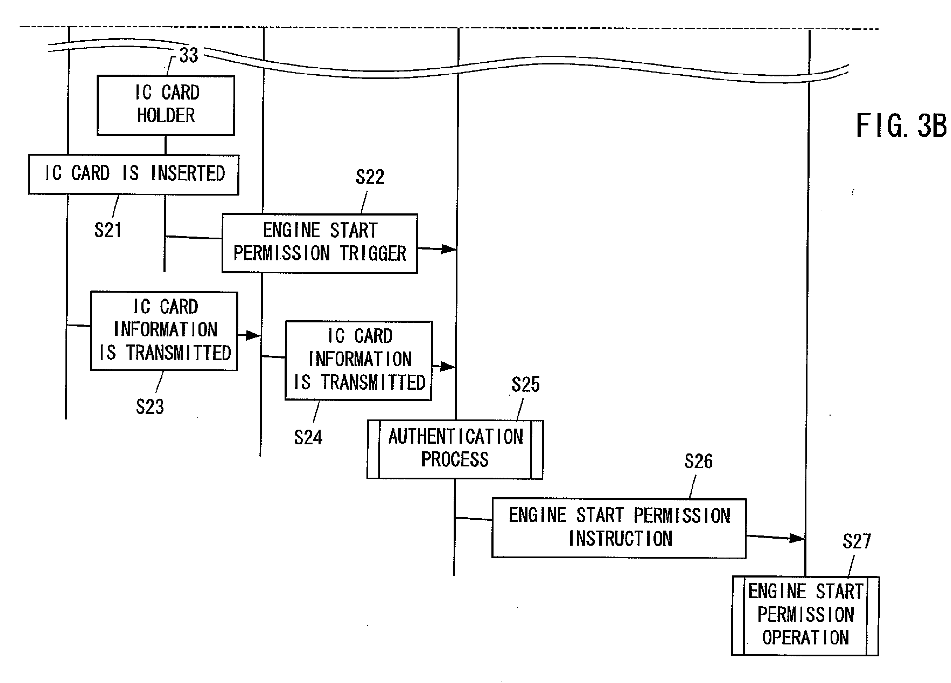

The description hereinlater will be directed to the operation of the present embodiment of the vehicle unlocking system 10 with reference to FIG 3.

As clearly seen from FIG. 3, the batteryless noncontact IC card 20 carried by a user of the vehicle is firstly approached in the vicinity of the exterior mirror unit 60 (step S11). As a result of this, the communication means 31 is operated to supply electric power to the batteryless noncontact IC card 20, and the batteryless noncontact IC card 20 is operated to transmit a vehicle unlock permission trigger signal so as to start an authenticating operation for unlocking the vehicle lock (step S12), and the control means 32 is operated to receive the vehicle unlock permission trigger signal through the communication means 31.

Further, the batteryless noncontact IC card 20 is operated to transmit IC card information to the communication means 31 (step S 13), and the control means 32 is operated to receive the IC card information from the communication means 31 (step S14).

The authentication unit 32a forming part of the control means 32 is operated to read the predetermined authentication information from the authentication information storage unit 32b, and judge whether or not the IC card information is matched with the predetermined authentication information (step S15). When it is judged that the IC card information is matched with the predetermined authentication information, the control means 32 is operated to output an unlock permission signal, i.e., an unlock instruction, to the vehicle unlocking device 40 (step S16). The vehicle unlocking device 40 is operated to carry out the unlock operation (step S17), and a vehicle door is thus unlocked.

When it is, on the other hand, judged in the step S15 that the IC card information is not matched with the predetermined authentication information, the control means 32 is operated to abort the unlock operation, and the vehicle lock remains locked.

After the vehicle door is unlocked, the user of the vehicle gets in the vehicle and the batteryless noncontact IC card 20 is inserted by the user of the vehicle into and retained by the IC card holder 33 (step S21). As a result of this, the communication means 31 is operated to supply electric power to the batteryless noncontact IC card 20, and the batteryless noncontact IC card 20 is operated to transmit an engine start permission trigger signal so as to start an authenticating operation for permitting the engine to start (step S22), and the control means 32 is operated to receive the engine start permission trigger signal through the communication means 31.

The vehicle control apparatus 30 may be constructed in such a manner that the batteryless noncontact IC card 20 is not regarded as having been inserted into the IC card holder 30 in the step S21 in the case that the door is not opened although the planar antenna 31a enters into a state capable of being communicated with the batteryless noncontact IC card 20. The vehicle may be equipped with, for example, a door sensor for sensing an opening or closing position of the door, a seat occupancy sensor on the driver seat, or the like, so as to make the judgment whether or not the door is opened.

The process to be carried out in the step S22 is not limited to the case that the trigger signal is not transmitted until the batteryless noncontact IC card 20 is completely inserted into and retained by the IC card holder 33. The batteryless noncontact IC card 20 may be constructed so as to transmit the trigger signal, for example, while the batteryless noncontact IC card 20 is being inserted into the IC card holder 33.

Further, the batteryless noncontact IC card 20 is operated to transmit IC card information to the communication means 31 (step S23), and the control means 32 is operated to receive the IC card information from the communication means 31 (step S24).

The authentication unit 32a forming part of the control means 32 is operated to read the predetermined authentication information from the authentication information storage unit 32b, and judge whether or not the IC card information is matched with the predetermined authentication information (step S25). When it is judged that the IC card information is matched with the predetermined authentication information, the control means 32 is operated to output an engine start permission signal, i.e., an engine start permission instruction, to the engine start permitting device 50 (step S26). The engine start permitting device 50 is operated to carry out the engine start permission operation (step S27). As a result of this, the engine is permitted to start as soon as the engine start key is turned on.

When it is, on the other hand, judged in the step S25 that the IC card information is not matched with the predetermined authentication information, the engine start permission operation is aborted, and the engine remains prevented from starting even thought the engine start key may be turned on by the holder of the batteryless noncontact IC card 20.

While it has been described in the above that the batteryless noncontact IC card 20 is operative to transmit the vehicle unlock permission trigger signal in the aforementioned step S12 so as to start an authenticating operation for judging whether or the vehicle lock is to be unlocked, the batteryless noncontact IC card 20 may transmit any other trigger signal for starting a predetermined authenticating operation, in addition to or in place of the vehicle unlock permission trigger signal.

Further, the vehicle unlocking system 10 may comprise any other in-vehicle permitting device operative to carry out any other permission operation of permitting any other in-vehicle device mounted on the vehicle to be used in addition to or in place of the engine start permission operation.

The in-vehicle permitting device operative to carry out the permission operation may include, for example, an in-vehicle telephone permitting device for permitting an in-vehicle telephone to be used, an in-vehicle audio permitting device for permitting an in-vehicle audio device to be used, a combination meter permitting device for permitting a combination meter device to be used, an emergency calling permitting device for permitting an emergency calling device to be used, a road-to-vehicle communication permitting device for permitting a road-to-vehicle communication device to be used, and the like.

As described in the above, the vehicle control apparatus 30 thus constructed as previously mentioned will prevent the in-vehicle device from being used by an unauthorized person who are not registered and cannot be authenticated with his or her IC card information, resulting from the fact that the vehicle control apparatus 30 is operative to permit the aforementioned in-vehicle device to be used under the condition that the batteryless noncontact IC card 20 is inserted into the IC card holder 33, and the IC card information is matched with the predetermined authentication information. The vehicle control apparatus 30 thus constructed can protect, for example, registered information stored in the aforementioned in-vehicle device, and prevent from being charged for unauthorized use of the in-vehicle telephone and the road-to-vehicle device, and the like.

Note, in the above description, the planar antenna 31a is assumed to be provided in the exterior mirror unit 60 on the side of the driver seat, but this does not limit the present invention. The planar antennas 31a may be provided in, for example, exterior mirror units on the both sides of the driver seat and the passenger seat, and the IC card holder 33 may be mounted in the vicinity of the exterior mirror unit on the side of the driver seat. The vehicle control apparatus 30 thus constructed enables the user of the vehicle standing on any one of the driver seat side and the passenger seat side to unlock the vehicle lock. This leads to the fact that the vehicle control apparatus 30 thus constructed can further enhance convenience for a person other than the driver, resulting from the fact that the vehicle control apparatus 30 makes it possible for the person to bring baggage into the vehicle as well as get in the vehicle before the driver comes.

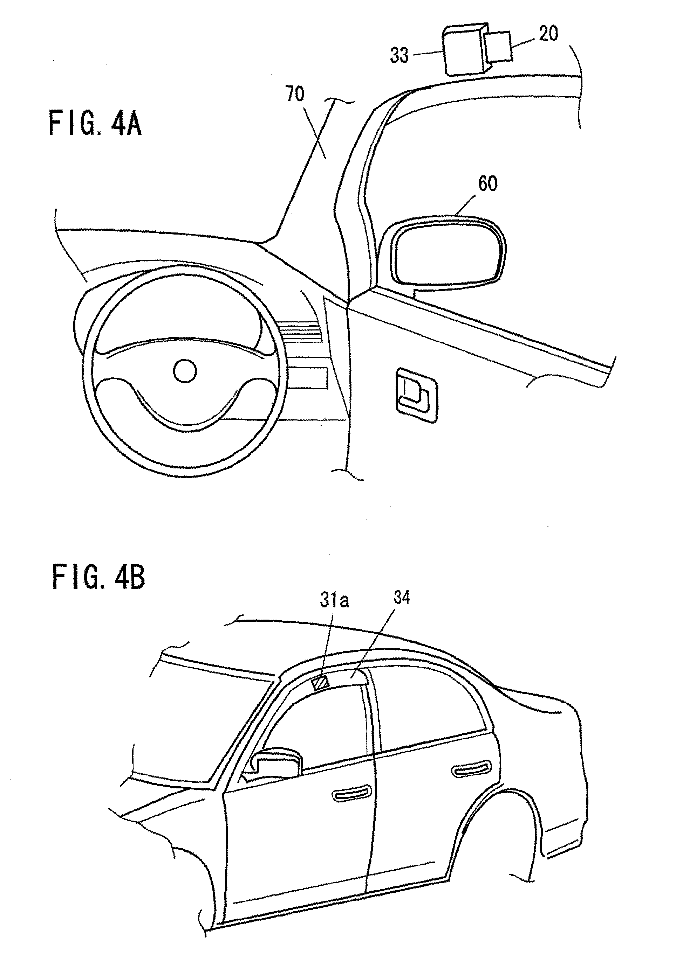

In addition, the planar antenna 31 a may be provided in any area other than the exterior mirror unit. The planar antenna 31a may be provided in, for example, a lower corner of a windshield on the in-vehicle driver seat side, and the IC card holder 33 may be mounted in the vicinity of the planar antenna 31a. Further, the planar antenna 31a may be provided in, for example, a sun visor on the driver seat side, and the IC card holder 33 may be integrally formed with a card pocket forming part of the sun visor. The card pocket can have an expressway ticket or the like temporarily held therein. Still further, the IC card holder 33 may be mounted in an upper door portion or in a ceiling portion on the door side in the vicinity of the inner side of the sun visor on the driver seat side, and the planar antenna 31a may be provided in the sun visor on the driver seat side. In this case, it is needless to mention that the planar antennas 31a may be provided in the sun visors both on the driver seat side and the passenger seat side. An example of the IC card holder 33 mounted in an upper door portion or in a ceiling portion on the door side in the vicinity of the inner side of the sun visor is shown in FIG. 4A, and an example of a sun visor 34 having provided therein the planar antenna 31a is shown in FIG. 4B.

As will be seen from the above, even in the case that the planar antenna 31a is provided in an area other than the exterior mirror unit, the user of the vehicle can unlock the vehicle lock from the outside of the vehicle and start the engine when he or she inserts the batteryless noncontact IC card 20 into the IC card holder 33.

As will be appreciated from the foregoing description, it is to be understood that the present embodiment of the vehicle unlocking system 10 can make the communication means 31 and the control means 32 common to the vehicle unlocking device 40 and the engine start permitting device 50, resulting from the fact that the communication means 31 is capable of communicating with both the vehicle unlocking device 40 and the engine start permitting device 50, and the control means 32 is operative to output an unlock permission signal to the vehicle unlocking device 40 when the authentication information is matched with the predetermined authentication under the condition that the vehicle lock is locked, and the same control means 32 is operative to output an engine start permission signal to the engine start permitting device 50 when the authentication information is matched with the predetermined authentication information under the condition that the vehicle lock is unlocked and the batteryless noncontact IC card 20 is retained by the IC card holder 33. This leads to the fact that the present embodiment of the vehicle unlocking system 10 can authenticate a user of the vehicle while being simple in construction and reduced in cost.

From the foregoing description, it will be appreciated that the vehicle unlocking system according to the present invention has an effect of authenticating a user of the vehicle while being simple in construction and reduced in cost, and is available as, for example, a control system for controlling the operation of in-vehicle devices by means of wireless communication.

### INDUSTRIAL APPLICABILITY OF THE PRESENT INVENTION

The present invention can provide a vehicle unlocking system which comprises control means operative to output respective signals different from each other before and after authentication information storage device is retained in retaining means, and has an effect of authenticating a user of the vehicle while being simple in construction and reduced in cost.

## Claims

1. A vehicle control apparatus, comprising:
antenna means for communicating with an authentication information storage unit having stored therein authentication information used to authenticate a user of a vehicle;
retaining means provided in said vehicle and disposed in spaced apart relationship with said antenna means at a predetermined distance to retain said authentication information storage unit; and
control means for selectively outputting a first control signal to control a predetermined first device and a second control signal to control a predetermined second device based on said authentication information received by said antenna means, and in which
said control means is operative to output said first control signal to said first device under the condition that a lock of said vehicle is locked and said authentication information is matched with predetermined authentication information, and output said second control signal to said second device under the condition that said authentication information is matched with predetermined authentication information after said lock of said vehicle is unlocked and said authentication information storage unit is retained by said retaining means.

2. A vehicle control apparatus as set forth in claim 1, in which
said antenna means is operative to supply electric power to said authentication information storage unit to drive said authentication information storage unit.

3. A vehicle control apparatus as set forth in claim 1 or claim 2, in which
said antenna means is constituted by a film type antenna.

4. A vehicle control apparatus as set forth in any one of claims 1 through 3, in which
said antenna means is provided in an outwardly exposed mirror unit forming part of said vehicle.

5. A vehicle control apparatus as set forth in any one of claims 1 through 3, in which
said antenna means is provided in an outwardly exposed sun visor forming part of said vehicle.

6. A vehicle control apparatus as set forth in any one of claims 1 through 5, in which
said authentication information storage unit is constituted by an electronic driver license.

7. A vehicle unlocking system, comprising:
a vehicle control apparatus as set forth in any one of claims 1 through 6; and
a vehicle unlocking device operative to unlock a lock of said vehicle upon receiving said first control signal.

8. A vehicle unlocking system as set forth in claim 7, further comprising:
an engine start permitting device operative to permit an engine forming part of said vehicle to start upon receiving said second control signal.

9. A vehicle unlocking system as set forth in claim 7 or claim 8, further comprising:
an in-vehicle telephone permitting device operative to permit an in-vehicle telephone device to be used upon receiving said second control signal.

10. A vehicle unlocking system as set forth in any one of claims 7 through 9, further comprising:
an in-vehicle audio permitting device operative to permit an in-vehicle audio device to be used upon receiving said second control signal.

11. A vehicle unlocking system as set forth in any one of claims 7 through 10, further comprising:
a combination meter permitting device operative to permit a combination meter device to be used upon receiving said second control signal.

12. A vehicle unlocking system as set forth in any one of claims 7 through 11, further comprising:
an emergency calling permitting device operative to permit an emergency calling device to be used upon receiving said second control signal.

13. A vehicle unlocking system as set forth in any one of claims 7 through 12, further comprising:
a road-to-vehicle communication permitting device operative to permit a road-to-vehicle communication device to be used upon receiving said second control signal.
